# EUROPEAN PATENT APPLICATION

(11) **EP 2 008 884 A1**
(43) Date of publication of application: **31.12.2008**
(21) Application number: 07111321.1
(22) Date of filing: 28.06.2007
(51) Int. Cl.: B60R 21/34, B62D 25/12

(54) **Bonnet for Motor Vehicles**

(71) Applicant: Ford Global Technologies, LLC, Dearborn, MI 48126 (US)
(72) Inventor: Wallman, Mattias, 432 54, Varberg (SE); Hallnéus, Gunnar, 416 71, Göteborg (SE); Blum, Peter, 433 32, Partille (SE); Fredriksson, Anders, 414 67, Göteborg (SE); Erlingfors, Mats, 444 65, Jörlanda (SE); Lindmark, Peter, 422 43, Hisings backa (SE)
(74) Representative: Valea AB

(57) **Abstract**

The present invention relates to a bonnet (1) for motor vehicles having an outer skin panel and an inner reinforcing panel (2) comprising reinforcing structures. The inner reinforcing panel (2) is connected with said outer skin panel and imparts rigidity thereto. Along a bonnet leading edge (5) the inner reinforcing panel (2) is provided with a plurality of deformation guide structures (4), providing a deformable upper leg (6) impact zone for the protection of pedestrians in the event of a collision with the motor vehicle.

## Description

### TECHNICAL FIELD

The present invention relates to a bonnet for motor vehicles having an outer skin panel and an inner reinforcing panel comprising reinforcing structures, said inner reinforcing panel connected with said outer skin panel and imparting rigidity thereto in accordance with the preamble of claim 1.

### BACKGROUND OF THE INVENTION

Pedestrian safety is an important issue with an ever increasing number of vehicles on our roads. The majority of pedestrian crashes involve a forward moving vehicle, such as a car. During such a crash, a standing or walking pedestrian is struck and accelerated to the speed of the vehicle and then continues forward as the vehicle brakes to a halt. In such a crash the leading edge of the bonnet often hits the upper leg, e.g. thigh or pelvis, of the pedestrian potentially causing limb injuries.

In a pedestrian vehicle crash situation as above it is desirable that the pedestrian's contact with the bonnet of the vehicle be as "forgiving" as possible so as to minimize possible injury to the pedestrian. However, at the same time the bonnet has to withstand a number of demands put thereupon in its daily use, such as pushing and sitting on the bonnet.

Some previous attempts to address the above problems have been based on the concept of improving the safety of pedestrians by use of vehicle bonnets including a bonnet outer panel which is configured to bend surely at a predetermined position in a frontal crash, as e.g. shown in US 7 090 298 which relates to a vehicle hood that includes a hood outer panel and a panel-shaped hood reinforcement which is arranged at the underside of the hood outer panel, where the hood reinforcement includes an integral bend which extends in the vehicle width direction to allow the hood reinforcement to bend in the front to rear direction of the vehicle in a frontal crash.

Although, these kinds of solutions may provide some cushioning effects when impacted by a pedestrian the bending ability is usually difficult to reconcile with the demands put upon the bonnet in its daily use, as exemplified above. Furthermore in view of the limited space available in today's densely packaged cars, the necessary manoeuvre space for such bending is usually limited if at all existing.

### SUMMARY OF THE INVENTION

An object of the present invention is to provide an improved bonnet for motor vehicles that may eliminate or at least reduce the problems described above. A specific object is to provide an improved bonnet for motor vehicles that may at least reduce upper leg injuries received by a pedestrian in the event of a collision with a vehicle equipped with such a bonnet.

According to a first aspect of the present invention this object is achieved in accordance with claim 1, which specifies a bonnet for motor vehicles having an outer skin panel and an inner reinforcing panel comprising reinforcing structures, said inner reinforcing panel connected with said outer skin panel and imparting rigidity thereto, characterised in the inner reinforcing panel along a bonnet leading edge being provided with a plurality of deformation guide structures, providing a deformable upper leg impact zone for the protection of pedestrians in the event of a collision with the motor vehicle.

Further embodiments are listed in the dependent claims.

It will be appreciated that features of the invention are susceptible to being combined in any combination without departing from the scope of the invention as defined by the accompanying claims.

### BRIEF DESCRIPTION OF THE DRAWINGS

By way of example only, embodiments of the present invention will now be described with reference to the accompanying drawings wherein:
Figure 1 schematically illustrates a vehicle bonnet in accordance with the present invention in a view from an underside thereof.
Figure 2 schematically illustrates the vehicle bonnet of figure 1 during impact by a pedestrian upper leg.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

The present invention relates to bonnets 1 for motor vehicles, sometimes also referred to as hoods, such as engine compartment bonnets for automotive vehicles. An engine compartment bonnet of a vehicle is formed in the upper part of an engine room to open and close the engine room. As used herein, the terms bonnet or engine compartment bonnet refers to the front bonnet of an automotive vehicle whether or not the bonnet encloses a compartment wherein an engine of the vehicle is located.

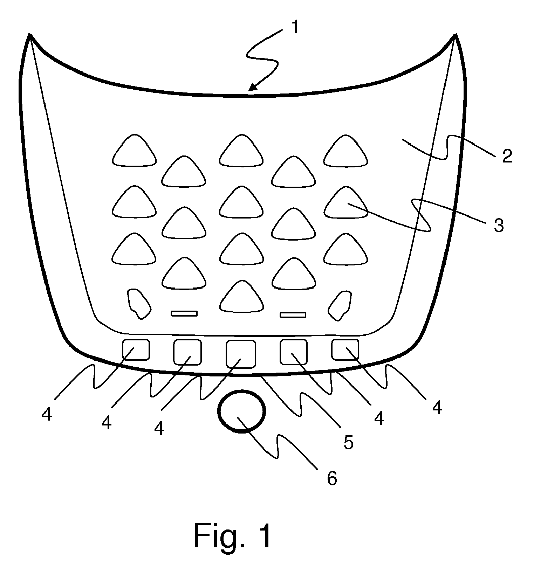

The vehicle bonnet 1, as illustrated in figure 1, includes a generally planar or curvilinear outer skin panel (not visible), such as a sheet metal panel, shaped in accordance with the design of the vehicle. The outer skin panel is joined to an inner reinforcing panel 2, which is arranged at the underside of the outer skin panel. The inner reinforcing panel 2 comprises reinforcing structures, such as a series of reinforcing ribs (not shown), usually provided by a stamped metallic sheet of material and imparting rigidity to the outer skin panel. These reinforcing ribs may be joined to the outer skin panel along the peripheral edges of the ribs and along certain portions of the ribs between the ribs peripheral edges.

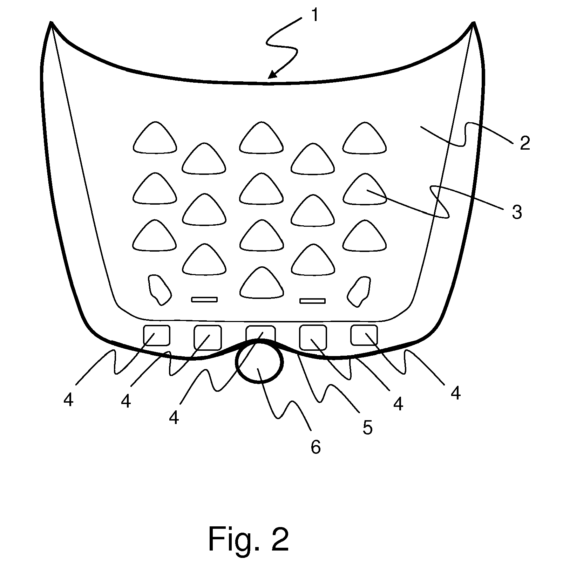

The reinforcing ribs may have a channel portion mainly formed in a triangular pattern and an area 3 between said ribs being cut out, as shown in figures 1 and 2. However other configurations of the reinforcing ribs and cut out areas are possible. It should be noted that the configuration of these reinforcing ribs and cut out areas are not the objects of the present invention.

In accordance with the present invention the inner reinforcing panel 2 is provided with a plurality of deformation guide structures 4, distributed along a bonnet leading edge 5. As used herein, the term bonnet leading edge refers to a rim area of the bonnet along a front edge thereof, as related to the normal front or forward direction of the automotive vehicle. This plurality of deformation guide structures 4 along the bonnet leading edge 5 provides a deformable pedestrian upper leg 6 impact zone for the protection of pedestrians in the event of a collision with the motor vehicle.

The deformation guide structures 4 may be provided as notches arranged in the inner reinforcing panel 2 in order to promote an energy absorbing collapse of the bonnet 1. The energy absorbing collapse of the bonnet 1, in the event of a pedestrian collision with the motor vehicle, is preferably promoted to occur essentially in a direction of a plane of the bonnet 1, thus avoiding impacting and being obstructed by other vehicle structures. The deformation guide notches 4 may comprise through openings in the inner reinforcing panel, thus providing weakened areas of the bonnet outer skin panel, i.e. weakened in a direction of a plane of the bonnet 1. It has been found advantageous to provide these openings 4 as essentially rectangular openings 4, although preferably having rounded corners. However, it is feasible that other geometries could provide satisfactorily results.

Depending on the overall design of the vehicle, such as placement of headlights and other details, the deformation guide structures 4 may be provided along the entire bonnet leading edge 5 or alternatively the deformation guide structures 4 may be provided along a central portion of the bonnet leading edge, e.g. in-between the headlights of the vehicle.

Thus, the leading edge of the bonnet 5, through this proposed plurality of deformation guide structures 4 arranged in the inner reinforcing panel 2, as illustrated in figure 2, enables a local deformation that minimizes the involved mass and thereby also provides for a reduced upper leg 6 reacting force in the event of a pedestrian collision with the motor vehicle. The design of the bonnet leading edge 5 is such that the energy generated during impact, such as caused by a collision with a pedestrian upper leg 6, is absorbed by virtue of the bonnet leading edge 5 undergoing deformation to absorb the impact energy, i.e. energy absorption takes place mainly due to local plastic deformation controlled by the plurality of deformation guide structures 4.

During testing, such as e.g. performed by Euro NCAP, a pedestrian upper legform 6 is used for assessing the leading edge of the bonnet 1.

Furthermore, in accordance with the present invention is also envisaged an automotive vehicle, which comprises such a bonnet 1 for motor vehicles as described above.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Bonnet (1) for motor vehicles having an outer skin panel and an inner reinforcing panel (2) comprising reinforcing structures, said inner reinforcing panel (2) connected with said outer skin panel and imparting rigidity thereto, **characterised in** the inner reinforcing panel (2) along a bonnet leading edge (5) being provided with a plurality of deformation guide structures (4), providing a deformable upper leg (6) impact zone for the protection of pedestrians in the event of a collision with the motor vehicle.

2. Bonnet (1) according to claim 1, **characterised in**
said deformation guide structures (4) being notches arranged in the inner reinforcing panel (2) to promote an energy absorbing collapse of the bonnet (1) in a direction of a plane of said bonnet (1) in the event of a pedestrian collision with the motor vehicle.

3. Bonnet according to claim 2, **characterised in**
said notches (4) comprising through openings in the inner reinforcing panel (2).

4. Bonnet according to claim 3, **characterised in**
said openings (4) being rectangular openings.

5. Bonnet according to any one of claims 1 to 4, **characterised in**
said deformation guide structures (4) being provided along the entire bonnet leading edge (5).

6. Bonnet according to any one of claims 1 to 4, **characterised in that**
said deformation guide structures (4) being provided along a central portion of the bonnet leading edge (5).

7. An automotive vehicle **characterised in that** it comprises a bonnet (1) for motor vehicles according to any one of claims 1 to 6.

## Amended claims

### Amended claims in accordance with Rule 137(2) EPC.

**1.** Bonnet (1) for motor vehicles having an outer skin panel and an inner reinforcing panel (2) comprising reinforcing structures, said inner reinforcing panel (2) connected with said outer skin panel and imparting rigidity thereto, **characterised in** the inner reinforcing panel (2) along a bonnet leading edge (5) being provided with a plurality of deformation guide structures (4), providing a deformable upper leg (6) impact zone for the protection of pedestrians in the event of a collision with the motor vehicle
said deformation guide structures (4) being notches arranged in the inner reinforcing panel (2) to promote an energy absorbing collapse of the bonnet (1) in a direction of a plane of said bonnet (1) in the event of a pedestrian collision with the motor vehicle.

**2.** Bonnet according to claim 1, **characterised in**
said notches (4) comprising through openings in the inner reinforcing panel (2).

**3.** Bonnet according to claim 2, **characterised in**
said openings (4) being rectangular openings.

**4.** Bonnet according to any one of claims 1 to 3, **characterised in**
said deformation guide structures (4) being provided along the entire bonnet leading edge (5).

**5.** Bonnet according to any one of claims 1 to 3, **characterised in that**
said deformation guide structures (4) being provided along a central portion of the bonnet leading edge (5).

**6.** An automotive vehicle **characterised in that** it comprises a bonnet (1) for motor vehicles according to any one of claims 1 to 5.
